Europäisches Patentamt

European Patent Office

Office européen des brevets

(19)

(11) **EP 1 524 541 A1**

(12) **EUROPEAN PATENT APPLICATION**

(43) Date of publication:
**20.04.2005 Bulletin 2005/16**

(51) Int Cl.7: **G02B 21/00, G01J 9/02, G01J 11/00, G04F 13/02**

(21) Application number: **04425769.9**

(22) Date of filing: **12.10.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **15.10.2003  IT  FI20030261**

(71) Applicant: **ISTITUTO NAZIONALE DI OTTICA**
**50125 Arcetri (Firenze) (IT)**

(72) Inventors:
• **Quercioli, Franco**
 **50126 Firenze (IT)**

• **Tiribilli, Bruno**
 **50100 Firenze (IT)**
• **Vassalli, Massimo**
 **50022 Greve in Chinati Firenze (IT)**
• **Ghirelli, Alessandro**
 **50100 Firenze (IT)**

(74) Representative: **Mannucci, Michele et al**
 **Ufficio Tecnico Ing.A. Mannucci,**
 **Via della Scala 4**
 **50123 Firenze (IT)**

(54) **A multiphoton confocal microscope with autocorrelator for laser pulses based upon a lateral-shearing interferometer**

(57)    A confocal laser-scanning microscope, in particular a multiphoton microscope, comprises in combination: an ULS pulsed laser source; a scanning head (CSH) for scanning the laser beam (F) generated by said source; an optical path for the laser beam extending between the scanning head and a support (P) for a specimen to be examined; a focusing optics (O) set along the optical path; a photo-detector for detecting the radiation emitted by the specimen set on the support and impinged upon by the radiation of the laser source. The microscope further comprises a lateral-shearing interferometer, which can be inserted along the optical path.

Fig.5

EP 1 524 541 A1

## Description

Technical field

The present invention relates to a confocal microscope and more in particular to a multiphoton confocal laser-scanning microscope.

The present invention moreover relates to an accessory for a microscope of the aforesaid type, and a method of temporal characterization of the laser source of such a microscope.

According to a different aspect, the invention relates to an innovative type of autocorrelator with lateral-shearing interferometer.

State of the art

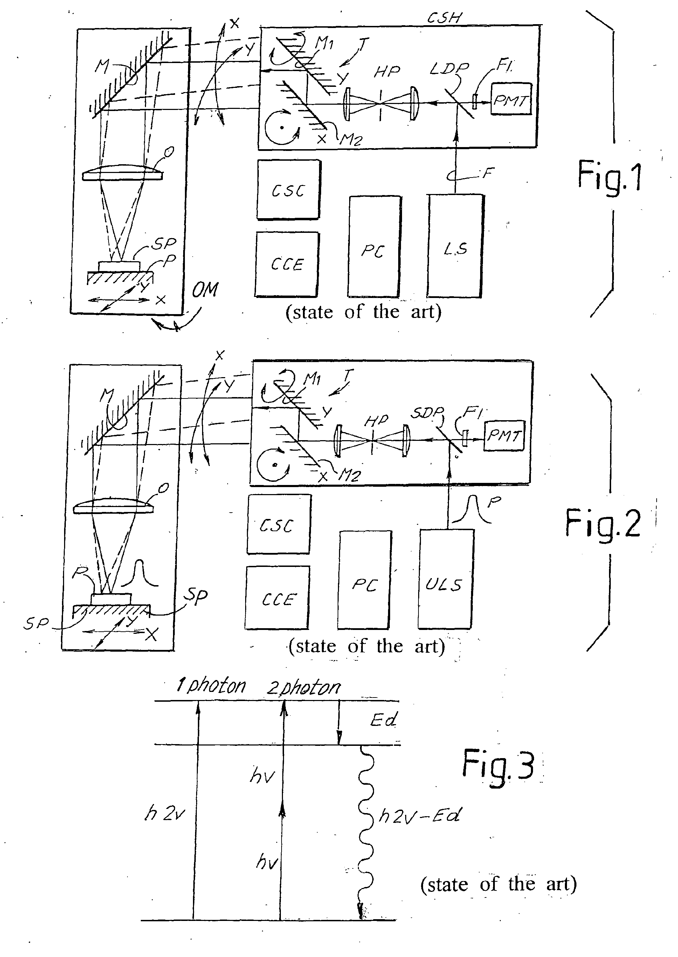

A confocal laser-scanning microscope is a type of optical microscope in which the illumination of the specimen to be examined is performed point by point by carrying out a scan of a beam of light (excitation light) emitted by a laser. A diagram of a confocal laser-scanning microscope is illustrated in Figure 1. Designated by LS is a laser source, the beam of which is deviated by a dichroic mirror LPD. The beam deviated by the dichroic mirror traverses a scanning system contained in the assembly designated by CSH, comprising a pair of mirrors M1, M2 mounted on galvanometers and oscillating about two axes X and Y, as indicated schematically by the doubleheaded arrows in Figure 1. The collimated laser beam is then transported to the optical microscope OM along an optical path defined by optics and mirrors, schematically represented, by way of example, in Figure 1 by a single bending mirror M and by an objective O. Along the optical path the beam is focused on the specimen SP carried by a specimen-holder support P. The specimen is marked with a dye (chromophore), which has the characteristic of emitting by fluorescence when it is excited with a light at the wavelength of emission of the laser source LS.

The mirrors of the scanning head deflect the laser beam angularly, and the objective O transforms this movement into a linear scan in the plane x, y of the focal point. The co-ordinates x and y are directly proportional to the respective scanning angles (in the paraxial approximation), and the constant of proportionality is the focal length of the objective.

In each point of the specimen SP, the laser light excites the dye with which the specimen has been marked, and the dye emits light of fluorescence of lower energy (lower frequency i.e., longer wavelength). The latter is collected by the objective and retraces in reverse the same optical path as that of the excitation beam. Once the dichroic mirror LPD (LPD = Long-Pass Dichroic) has been reached, the light traverses it, because it has a longer wavelength than the beam F of the excitation light emitted by the laser source LS. The radiation that traverses the dichroic mirror LPD is detected by a photo-detector, constituted, for example, by a photomultiplier PMT after being further filtered by an emission filter FI.

This process is repeated for all the points of the specimen in sequence, following the scanning path x, y.

The entire process of creation of the image is controlled by a control electronics, designated as a whole by CCE, and by a computer PC, which handles the entire process and at the end generates a digital image that will be shown on the instrument screen, designated as a whole by CSC.

The fundamental characteristic of a confocal laser-scanning microscope is the presence, in the optical path, of a spatial filtering system constituted by a small diaphragm PH, which has the task of filtering out all the light of fluorescence emitted by the specimen SP, except that coming from the perfectly focused plane. This characteristic of optical sectioning enables isolation of a single image plane even in thick specimens. Furthermore, by executing a scan of the specimen along the optical axis of the microscope, i.e., by changing the focusing plane and acquiring images on a number of planes, it is possible to carry out a three-dimensional reconstruction of the specimen.

The principles on which a confocal laser-scanning microscope is based are described, for example, in J. B. Pawley, Ed., «Handbook of Biological Confocal Microscopy», Plenum Press, New York, 445- 458 (1995).

Examination of specimens with a confocal laser-scanning microscope of the type described presents certain limitations. For example, in certain applications the wavelength of the radiation that enables emission in fluorescence damages the specimens being examined. This is the typical case of cell specimens. In order to overcome these drawbacks, particular confocal laser-scanning microscopes, referred to as multiphoton microscopes, have been developed. Examples of microscopes of this sort are described in the U.S. patents Nos. 6,449,039, 5,034,613, 6,437,913, 6,344,653, and 5,583,342. The problems deriving from one-photon excitation, and the advantages of the multiphoton technique are summed up in the U.S. patent No. 6,528,802. Further information on multiphoton confocal laser-scanning microscopes are contained in W. Denk, J.H. Strickler, and W.W. Webb, <<Two-photon laser scanning fluorescence microscopy>>, Science, 248, pp. 73-76 (1990); A. Diaspro, M. Corosu, P. Ramoino, and M. Robello <<Adapting a compact confocal microscope system to a two-photon excitation fluorescence imaging architecture» Microsc. Res. Tech. 47, 196-205 (1999); A. Diaspro Ed. <<Confocal and Two-Photon Microscopy: Foundations, Applications and Advances», Wiley-Liss, New York, USA, (2002).

The two-photon absorption process (represented schematically in Figure 3) consists in exciting a level of energy corresponding to 2 hv, causing the dye to absorb two photons of energy hν (where ν = c/λ is the frequency of light, c is the speed of light, and λ is the wavelength) instead of just one photon of double energy h*2ν. From this level the molecule decays by fluorescence, emitting a photon of energy:

$$h\nu_{em} = h\,2\nu - E_d \qquad (I)$$

where $E_d$ is the energy lost by decay of a non-radiative type. The frequency of the light emitted $\nu_{em}$ is thus higher (shorter wavelength) than that of excitation and close to twice the latter (2ν). In the case of one-photon excitation exactly the opposite is true: namely, the frequency of the light emitted $\nu_{em}$ is lower (longer wavelength) than that of excitation.

The process of absorption with two (or more) photons is extremely unlikely, and to be able to trigger it very high levels of intensity of excitation light are necessary. To prevent destruction of the specimen, the laser source used in the microscope is a pulsed source with very short pulses, usually referred to as Ultrafast Laser System or ULS. In these systems, all the light energy of excitation is concentrated in pulses P of duration in the region of one hundred femtoseconds ($10^{-13}$ sec), and the instantaneous levels of intensity required by the multi-photon absorption process are hence reached, albeit maintaining medium-to-low levels of power, similar to the ones that are normal for one-photon excitation.

The structure of a multiphoton confocal microscope (Figure 2) is exactly the same as the one previously described with reference to Figure 1, except for the laser source, which in this case is a pulsed laser source with pulses of the duration mentioned above, and for the dichroic coupling mirror (designated by SPD in Figure 2), which in this case must cause the light emitted by fluorescence, which is of shorter wavelength than the excitation light, to pass. The dichroic mirror is thus a short-pass dichroic (SPD) mirror.

The efficiency of the process of excitation with two (or more) photons depends in a critical way upon the duration of the pulse, and hence the measurement of the latter is of fundamental importance. There does not exist such a fast detector capable of detecting faithfully the time trend of a light pulse of a duration of a hundred femtoseconds or less. The only way to make this measurement is to use an autocorrelator. An autocorrelator is a device based upon exploitation of the phenomenon of interference between two light beams obtained by splitting one and the same pulsed beam. The function of interferometric autocorrelation that is obtained is linked to the duration of the pulse of the signal measured. The principles on which the autocorrelator is based will be recalled hereinafter synthetically within the limits necessary for a better understanding of the present invention. They are in themselves known, and for a more extensive description of the operation of these devices the reader is referred, for example, to: J. C. Diets, W. Rudolph, «Ultrashort Laser Pulse Phenomena: Fundamentals, Techniques, & Applications on a Femtosecond Time Scale>>, Academic Press, Inc., San Diego, USA (1996); Y. Takagi, T. Kobayashi, K. Yoshihara, and S. Imamura, <<Multiple- and single-shot autocorrelator based on two-photon conductivity in semiconductors>>, Opt. Lett., 17, 658- 660 (1992); A. M. Streltsov, J. K. Ranka, and A. L. Gaeta, «Femtosecond ultraviolet autocorrelation measurements based on two-photon conductivity in fused silica>>, Opt. Lett., 23, 798-800 (1998); D. Panasenko and Y. Fainman, «Interferometric correlation of infrared femtosecond pulses with two-photon conductivity in a silicon CCD», Appl. Opt., 41, 3748-3752 (2002); J.M. Roth, T.E. Murphy, C. Xu, <<Ultrasensitive and high-dynamic-range two-photon absorption in a GaAs photomultiplier tube», Opt. Lett., 27, 2076-2078 (2002); J. K. Ranka, A.L. Gaeta, A. Baltuska, M.S. Pshenichnikov, and D.A. Wiersma, <<Autocorrelation measurement of 6-fs pulses based on the two-photon-induced photocurrent in a GaAsP photodiode», Opt. Lett., 22, 1344-1346 (1997).

The use of autocorrelators for temporal characterization of the laser pulse in multiphoton confocal laser-scanning microscopes is described in: G.J. Brakenhoff, M. Müller, J. Squier, «Femtosecond pulse width control in microscopy by two-photon absorption autocorrelation», J. Microsc. 179, 253- 260 (1995); F. Cannone, G. Chirico, G. Baldini, A. Diaspro, <<Measurement of the laser pulse width on the microscope objective plane by modulated autocorrelation method», J. Microsc., 210, 149-157 (2003); J.B. Guild, C. Xu, W.W. Webb, <<Measurement of group delay dispersion of high numerical aperture lenses using two-photon excited fluorescence», Appl. Opt., 36, 397- 401 (1997); P.E. Hanninen, S.W. Hell, «Femtosecond pulse broadening in the focal region of a two-photon fluorescence microscope», Bioimaging, 2, 117-121 (1994); A.C. Millard, D. N. Fittinghoff, J.A. Squier, M. Mutter, A.L. Gaeta, <<Using GaAsP photodiodes to characterize ultrashort pulses under high numerical aperture focusing in microscopy», J. Microsc., 193, 179-181 (1999); M. Müller, J. Squier, G.J. Brakenhoff, <<Measurement of femtosecond pulses in the focal point of a high-numerical-aperture lens by two-photon absorption>>, Opt. Lett. 20, 1038 - 1040 (1995); M. Müller, J. Squier, R. Wolleschensky, U. Simon, G.J. Brakenhoff, <<Dispersion precompensation of 15 femtosecond optical pulses for high numerical aperture objectives>>, J. Microsc. 191, 141-150 (1998); R. Wolleschensky, T. Feurer, R. Sauerbrey, U. Simon, <<Characterization and optimization of a laser-scanning microscope in the femtosecond regime», Appl. Phys. B 67, 87-94 (1998).

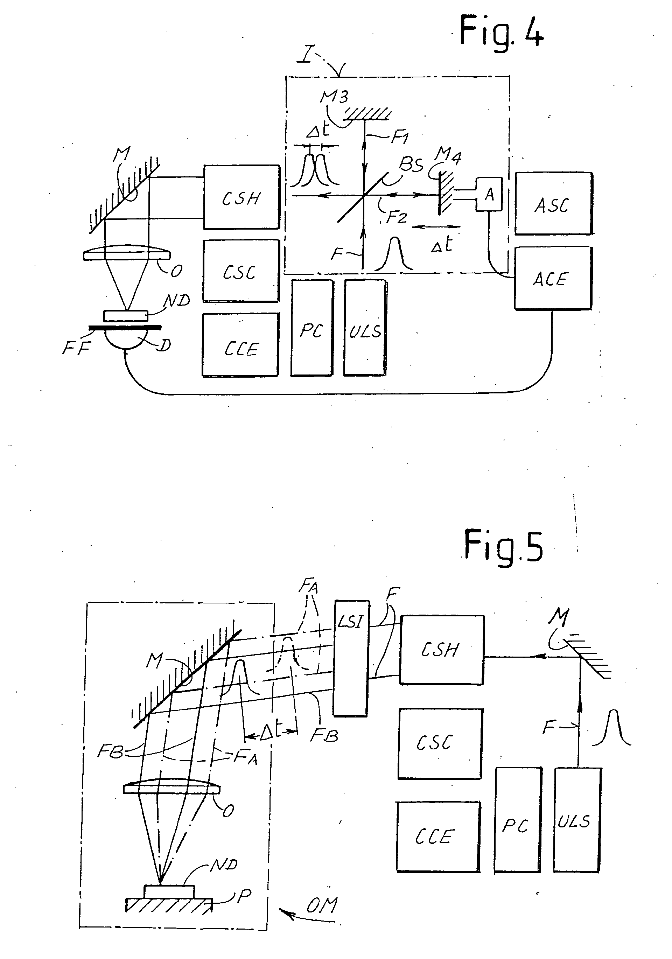

Figure 4 is a schematic representation of an autocorrelator applied to a multiphoton confocal laser-scanning microscope. Designated by ULS, PC, CCE, CSC, M, and O are the components described with reference to Figures 1 and 2. CSH designates the ensemble formed by the scanning head M1, M2 and by the diaphragm PH. Combined to the microscope is an interferometer, designated as a whole by I, the light source of which is constituted by the same laser source ULS of the microscope. The interferometer I comprises a beam splitter BS set at 45° along the path of the light beam coming from the source ULS. The beam splitter splits the incoming beam F into two beams F1 and F2. The beam F1 that traverses the beam splitter BS is reflected by a mirror M3 once again in the direction of the beam splitter BS. The second beam F2, which is reflected by the beam splitter BS, is reflected by a mirror M4 once again in the direction of the beam splitter BS.

Whilst the mirror M3 is in a fixed position, the mirror M4 is associated to an actuator A (a stepper motor, a piezoelectric ceramic or the like), which can displace it in the direction of propagation of the beam F2 to increase or reduce the length of the path of said beam F2 with respect to the length of the path of the beam F1.

The two beams F1 and F2 back-reflected by the mirrors M3 and M4 are then recombined by the beam splitter BS and come out combined by the interferometer I.

When the pulsed laser source ULS emits a laser pulse, at the output from the interferometer I there is obtained a pair of pulses temporally separated from one another by a time interval $\Delta t$, which can vary as a result of the displacement imposed by the actuator A on the mirror M4 on account of the different length of the paths followed by the two beams.

The two pulses then traverse the optical path schematically represented by the mirror M and by the objective O of the microscope and are focused by the latter on a nonlinear device ND, usually a second-harmonic crystal, or else a material that responds to a process of two-photon absorption, set in a position corresponding to the support of the specimen in the microscope, i.e., in the focus of the objective O of the microscope.

The focusing optics O of the microscope has the function of concentrating the light intensity, favoring the nonlinear process in the device ND. The latter responds by generating a double-frequency field $E_{2v}$ proportional to the square of the incident field $E_{tot}^2$, with a process of generation of a second harmonic, in the case where a second-harmonic crystal is used, or else by generating an intensity of fluorescence $I_{2p}$ that is proportional to the square of the incident intensity $(|E_{tot}|^2)^2$ in the case of a two-photon absorption process.

The light radiation emitted by the nonlinear device ND is then detected via a photo-detector D (for example a photomultiplier), in front of which is set a filter FF to eliminate completely the excitation light. In some recent applications, the nonlinear device and the photodetector are constituted by a single semiconductor component, which exploits the effect of two-photon absorption.

The field incident upon the nonlinear device

ND is:

$$E_{tot}(t, \Delta t) = E( t ) + E(t + \Delta t)$$

and (in the case of a nonlinear device that uses a two-photon absorption process) the signal detected is proportional to the fourth power of the field:

$$I_{2P}(\Delta t) = \int |E_{tot}(t, \Delta t)|^4 \, dt \qquad (II)$$

As the time delay $\Delta t$ obtained by changing the path traversed by the beam F2 via the actuator A varies, the function $I_{2p}(\Delta t)$ is obtained, which is referred to as second-order interferometric autocorrelation function, and therefrom it is possible to extract the information sought on the duration of the pulse.

A control electronics of the autocorrelator, designated as a whole by ACE, handles the operations of scanning of the delay line, of acquisition of the detected signal, and of display of the data on the monitor of the autocorrelator, designated as a whole by ASC.

The interferometric system must be of the white-light type, i.e., the optical path traversed by the two beams must be approximately equal, the aim being to enable the two pulses to be temporally superimposed.

Although there exist other possible combinations of an autocorrelator with a confocal microscope (see, for example, the U.S. patent No. 6,344,653), the configuration illustrated in Figure 4 is the most appropriate. In fact, in a multiphoton confocal microscope the pulse generated by the laser source traverses a large number of optical systems for beam transport before being focused by the objective O on the specimen under examination. The chromatic dispersion of optical glasses introduces a variation in the speed of the various spectral components contained in an ultrashort pulse, with a consequent temporal broadening of the pulse. It is hence important for the measurement of the duration of the latter to be made downstream of the entire optical system, namely, at a point corresponding to the position of the specimen in the microscope.

On the other hand, the use of an autocorrelator in a multiphoton confocal laser-scanning microscope is particularly complex, as may be inferred already from the diagram (albeit simplified) of the optical and electronic components that must be added (Figure 4) to obtain temporal characterization of the pulse.

## Objects and summary of the invention

According to a first aspect, the object of the present invention is to provide a confocal laser-scanning microscope, in particular a multiphoton microscope, in which the aforesaid limit of complexity is substantially reduced or even eliminated.

In particular, the object of the invention is to provide a microscope of the aforesaid type that is more compact.

Basically, these and other objects and advantages, which will appear clear to those skilled in the art from the ensuing text, are achieved with a confocal laser-scanning microscope comprising in combination: a pulsed laser source; a scanning head for scanning the laser beam generated by said source; an optical path for the laser beam from the scanning head to a support for a specimen to be examined; a focusing optics; a photo-detector for detecting the radiation emitted by the specimen set on the support and impinged upon by the radiation from the laser source. Characteristically, according to the invention, the microscope comprises a lateral-shearing interferometer, which can be inserted along the optical path, between the scanning head and the support for the specimens.

In practice, the interferometer forms - along with the focusing optics and the photo-detector - an autocorrelator for temporal characterization of the pulse of the laser source. The nonlinear device of the autocorrelator is constituted by a specimen set on said support, for example a specimen of fluorescent dye. With the insertion of the interferometer in the optical path of the microscope, said interferometer is transformed into an autocorrelator that uses the same components as the microscope itself. The autocorrelation function is obtained by the image generated via the movement of scanning of the beam of the laser source obtained with the scanning head itself of the microscope.

The advantage of a configuration of this type derives from the fact that the autocorrelator is basically constituted by the same components already provided in the confocal microscope, with the mere addition of a lateral-shearing interferometer, which is an optical element of low cost and modest encumbrance. The lateral-shearing interferometer can conveniently be inserted on a filter-holder slider, normally provided in this type of microscope. Consequently, temporal characterization of the laser source is obtained without any type of intervention, other than the mere insertion of the interferometer in the optical path and the detection of the autocorrelation function via scanning of the laser beam performed using the scanning head with which the microscope is equipped. There is no longer any need to provide an auxiliary detector, control electronics, and monitor, as, instead, is necessary in traditional configurations (Figure 4).

Lateral-shearing interferometers are in themselves known, even though applications thereof as suggested herein do not emerge from the existing literature. Details regarding the constitution of various types of lateral-shearing interferometers can be found in: M.V. Mantravadi, «Lateral Shearing Interferometers>> in Optical Shop Testing, D. Malacara Ed., 2nd Ed., Wiley & Sons, Inc., New York (1992); S. Mallick, «Common-Path Interferometers» in Optical Shop Testing , D. Malacara

Ed., 2nd Ed., Wiley & Sons, Inc., New York (1992); D. Kelsall, Proc. Phys. Soc., 73, 465 (1959); Z.A. Yasa, N. M. Amer, <<A rapid-scanning autocorrelation scheme for continuous monitoring of picosecond laser pulses>>, Opt. Commun., 36, 406-408 (1981); S. Costantino, A.R. Libertun, P. Do Campo, J.R. Torga, O.E. Martinez, <<Fast scanner with position monitor for large optical delays>>, Opt. Commun., 198, 287-291 (2001); H. Mashiko, A. Suda, K. Midorikawa, «All-reflective interferometric autocorrelator for the measurement of ultrashort optical pulses>>, Appl. Phys. B, 76, 525 - 530 (2003); D.M. Riffe, A.J. Sabbah, <<A compact rotating-mirror autocorrelator design for femtosecond and picosecond laser pulses», Rev. Sci. Instr., 69, 3099- 3102 (1998); K. Wada, et al., «Simple real-time fringe-resolved autocorrelator for measuring picosecond optical pulses», Opt. Commun., 214, 343-351 (2002); D. Welford, B.C. Johnson, <<Real time monitoring of CW mode-locked dye laser pulses using a rapid-scanning autocorrelator», Opt. Commun., 45, 101- 104 (1983); G. W.R. Leibbrandt, G. Harbers, and P.J. Kunst, <<Wavefront analysis with high accuracy by use of a double-grating lateral shearing interferometer», Appl. Opt., 35, 6151-6161 (1996); H. Schreiber, J. Schwider, «Lateral shearing interferometer based on two Ronchi phase gratings in series», Appl. Opt., 36, 5321-5324 (1997); P. Yeh, <<Autocorrelation of ultrashort optical pulses using polarization interferometry», Opt. Lett., 8, 330-332 (1983); S. M. Kobtsev, S.V. Smirnov, S.V. Kukarin, V.B. Sorokin, <<Femtosecond autocorrelator based on swinging birifrangent plate», Quantum Electr., 31, 829-833 (2001); D.T. Reid, M. Padgett, C. McGowan, W.E. Sleat, and W. Sibbett, <<Light-emitting diodes as measurement devices for femtosecond laser pulses», Opt. Lett., 22, 233-235 (1997); D.T. Reid, W.E. Sleat, W. Sibbett, «Autocorrelation of ultrashort electromagnetic pulses»; U.S. patent No. 6,195,167; and M. Françon, «Optical Interferometry», Chap. VII «Polarization Interferometers», pp. 137-161, Academic Press, New York (1966).

Further advantageous characteristics and embodiments of the microscope according to the invention are specified in the attached dependent claims.

According to a different aspect, the invention relates to a method for temporal characterization of a pulsed laser beam in a confocal laser-scanning microscope, in particular a multiphoton microscope, in which the laser source is pulsed with ultrashort pulse duration.

Basically, according to the invention there is provided a method for temporal characterization of a pulsed laser beam in a confocal laser-scanning microscope, in particular a multiphoton microscope, characterized in that an interferometric autocorrelation function is generated by performing with the microscope itself a scan of a specimen having a nonlinear behavior and by setting a lateral-shearing interferometer between the scanning head and the objective of said microscope. The angular scanning of the laser beam generates the interferometric autocorrelation function.

According to a further aspect, the purpose of the invention is to provide an accessory for multiphoton confocal laser-scanning microscopes that enables a temporal characterization of the laser source to be made in a rapid, simple and inexpensive way. The accessory according to the invention is characterized in that it comprises a lateral-shearing interferometer.

In practice, in fact, the invention can be implemented also by providing an accessory that can be mounted on the microscope, using, for example, the filter-holder devices with which it is equipped, to provide existing microscopes with the autocorrelation function via simple insertion of said accessory in the optical path, exactly as a normal filter or other accessory with which said microscopes are provided.

Consequently, falling within the scope of the present invention is also a lateral-shearing interferometer that is provided with a structure that renders it suitable for use as accessory in a confocal microscope of the aforesaid type.

According to yet a further aspect, the purpose of the invention is to provide an innovative type of autocorrelator, based upon the use of a lateral-shearing interferometer. Said types of autocorrelators are known, for example from US-A-6.195.167. Whilst in these known autocorrelators, the autocorrelation function is obtained by translating a mirror of the interferometer parallel to the direction of the incoming beam, which remains unvaried, according to the invention it is envisaged that the beam to be characterized temporally via the autocorrelator performs an angular scan, in such a way that, at the output from the interferometer, there will be two parallel beams temporally out-of-phase by a time interval that depends upon the scanning angle.

Brief description of the drawings

A better understanding of the invention will emerge from the ensuing description and the annexed drawings, which show non-limiting practical embodiments of the invention. More in particular, in the plate of drawings:

-   Figure 1 is a diagram of a confocal microscope according to the known art;
-   Figure 2 is a diagram of a multiphoton confocal microscope according to the known art;
-   Figure 3 is a schematic representation of the phenomenon of emission by fluorescence with two-photon absorption;
-   Figure 4 is a diagram of a multiphoton confocal microscope and a corresponding autocorrelator according to the known art;
-   Figure 5 is a diagram of a multiphoton confocal microscope and an autocorrelator according to the invention;
-   Figure 6a is an image produced by fluorescence as a result of two-photon absorption;
-   Figure 6b is a curve representing the profile of intensity of fluorescence along the axis x of the image of Figure 6a;
-   Figure 7 is a schematic representation of the working principle of a lateral-shearing interferometer;
-   Figures 8 to 15 are optical diagrams of various types of lateral-shearing interferometer that can be used in a microscope according to the invention; and
-   Figure 16 shows a diagram of an optical microscope with the indication of the position in which there can be set an accessory according to the invention, incorporating a lateral-shearing interferometer.

Detailed description of non-limiting embodiments of the invention

Figure 5 shows the functional diagram of the multiphoton confocal laser-scanning microscope with autocorrelator according to the invention. The microscope comprises a pulsed laser source ULS, which emits pulses of very short duration, in the region of 100 femtoseconds. The pulsed laser beam F is deviated by a mirror M in the direction of the scanning head CSH, which comprises two mirrors similar to the mirrors M1, M2 illustrated in Figure 1, oscillating about two axes of oscillation set at 90° from one another. Downstream of the scanning head comprising the two mirrors M1, M2 is set an optical microscope, and an optical path develops, which comprises a series of optical beam-transport elements, herein symbolized simply (as in the Figures 1 and 2 described above) by a bending mirror M and an objective O, which focuses the beam on a specimen set on a specimen-holder support P. Designated as a whole by CSC, CCE, and PC are the screen, the control electronics and a computer, respectively. Further elements of the microscope in themselves known, such as in particular the detector, are not illustrated for reasons of simplicity of representation. In particular, the microscope can comprise further elements of detection, as illustrated in Figure 1, set in the scanning system or in another position, according to configurations known to persons skilled in the art.

Characteristically, along the optical path between the scanning head comprising the mirrors M1 and M2 and the objective O there can be inserted a lateral-shearing interferometer, designated as a whole by LSI. This can be set on a filter support (in itself known and not illustrated).

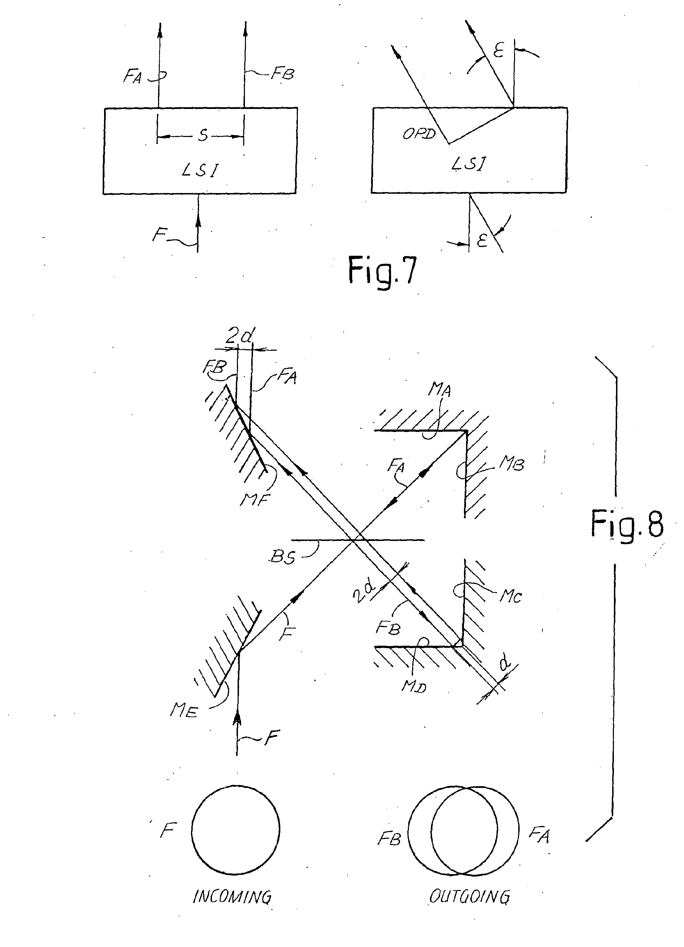

The working principle of the lateral-shearing interferometer is known to persons skilled in the art but is herein briefly recalled, limiting the description to what is strictly necessary for an understanding of the present invention, with reference to Figure 7. The interferometer LSI creates two copies FA, FB of an incident wavefront F, shifted laterally with respect to one another by a certain distance s referred to as «shear».

There exist many possible configurations for producing a lateral-shearing interferometer, and some of the most advantageous ones for the application referred to in the present invention will be described in what follows with reference to Figures 8 to 15. The ones of interest for application to the measurement of ultrashort pulses are those for white light. Furthermore, for the instrumental configuration suggested in Figure 5, those for collimated light, where the two outgoing beams FA and FB are parallel to the incoming beam, are suitable in so far as the interferometer is set in a position along the optical path in which the beam leaving the scanning head is collimated.

From Figure 7 it may be noted that, when the beam F is perpendicular to the interferometer (left-hand diagram), the difference of optical path between the two outgoing beams FA and FB is zero. The reason for this is that the interferometer is of the type for white light. Instead, in the case where the incoming beam has an angle of incidence $\varepsilon$ (right-hand diagram in Figure 7), a difference of optical path (OPD) is generated between the two outgoing beams FA and FB, given by:

$$OPD = s \sin \varepsilon \qquad (III)$$

which may be approximated to $s\varepsilon$ for small values of $\varepsilon$. This difference of optical path corresponds to a time delay $\Delta t$ between the wavefronts of the beams FA and FB given by:

$$\Delta t = OPD/c \approx s\varepsilon/c \qquad (IV)$$

where c is the speed of propagation of light.

A difference of the interferometer described previously with reference to Figure 4 (Michelson interferometer), where the time delay was obtained with a linear translation of the mirror M4, in the lateral-shearing interferometer the delay is obtained by varying the angle of incidence of the incoming beam.

Returning now to the diagram shown in Figure 5, a uniformly fluorescent specimen ND is set on the object-holder support P of the microscope (for example, a slide on which a fluorescent dye has been deposited). This specimen constitutes a simple nonlinear device of a correlator formed by the interferometer LSI and by the remaining components of the microscope.

Once the specimen ND has been set on the object-holder support P, there is then acquired an image of the fluorescence produced by two-photon absorption with the same procedure that is normally adopted using the microscope for examination of any specimen.

As has already been described previously, the confocal laser-scanning microscope constructs the image point by point, making a scan of the laser excitation beam. The presence of the lateral-shearing interferometer LSI in the optical path of the microscope means that there are generated two beams FA, FB parallel to one another and to the incoming beam F and that a time delay with respect to one another is introduced during scanning, a delay which varies according to the inclination of the beam obtained by oscillation of the mirror of the scanning head. The time delay is linearly dependent upon the scanning angle $\varepsilon$ and is given by the equation (IV).

The scan of the laser beam performed by the scanning head of the microscope is thus similar to the scan of the mirror in an ordinary autocorrelator and can replace the latter.

The two beams FA, FB and hence the two pulses that are temporally distant from one another by a time interval $\Delta t$ are then focused by the objective O in one and the same point of the specimen ND at a co-ordinate x, which also depends linearly upon $\varepsilon$ and is given by:

$$x = \varepsilon f \qquad (V)$$

where f is the focal length of the objective O.

The position x and the time delay $\Delta t$ are hence linked to one another by the relation:

$$x = \Delta t \, (fc/s) \qquad (VI)$$

The specimen ND thus excited emits, as a result of two-photon absorption, a fluorescence, which, once detected by the photomultiplier PMT of the microscope, produces an image:

$$I_{2p}(x,y) = I_{2p} \, [\Delta t \, (fc/s)] \qquad (VII)$$

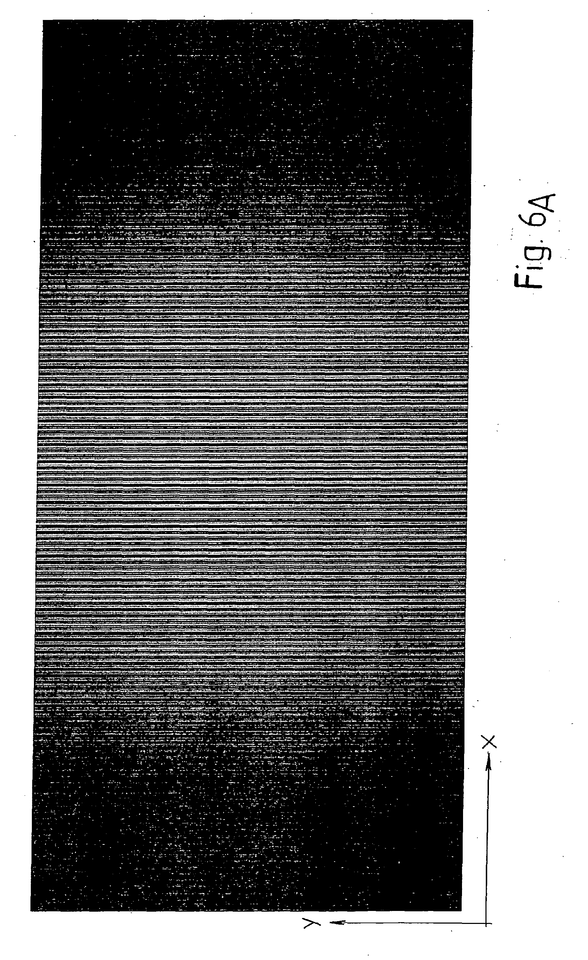

An example of this image is given in Figure 6a.

In the treatment just developed, it is implicit that the shear s caused by the interferometer LSI is in the direction of the x axis, and for this reason the image obtained is independent of the y co-ordinate.

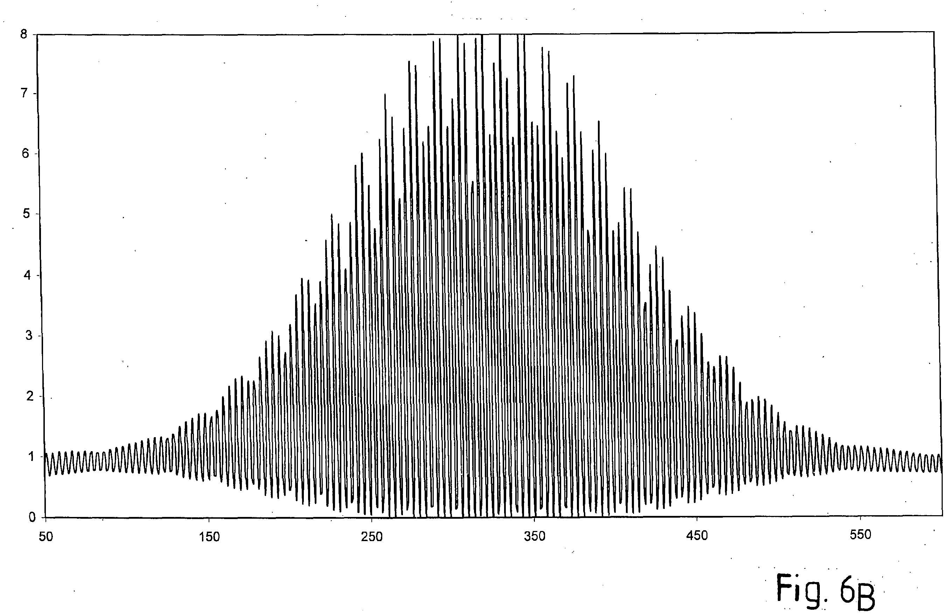

By making a profile of the fluorescence intensity along the x axis, a curve is obtained, represented in Figure 6b, which provides the interferometric autocorrelation function sought. This is precisely the measurement supplied by an autocorrelator, and therefrom (in a known way) the duration of the pulse of the laser source ULS is derived.

As has been noted previously, the configurations of the interferometer LSI of interest for the application described are the ones for collimated white light, in the case where the two outgoing beams are parallel to the incoming one. Amongst the possible configurations, described in brief in what follows are the ones that are the most advantageous. It is pointed out that all the interferometric configurations recorded are known in the literature but have never been applied in a context such as the autocorrelator proposed herein, i.e., in the path of the laser beam of a confocal laser-scanning microscope with two-photon excitation for measurement of the laser pulse duration.

To provide a further clarification, it is recalled that in the microscope techniques known as DIC (Differential Interference Contrast) an interferometric device of the LSI type (which uses Wollaston prisms) is employed, which, however, is of the "angular shearing" type. That is, the device creates two copies of the incident wavefront shifted angularly with respect to one another. Said two copies are then focused by the objective in two points close to one another of the specimen under examination.

In the present invention, instead, the two beams FA and FB produced by the lateral-shearing interferometer LSI are parallel to one another and hence, after they have traversed the objective, they are focused in the same point of the specimen.

For a detailed description of the principles of operation of the various interferometers briefly illustrated herein, the reader is referred to the literature recalled in the introductory part of the present description.

Figure 8 shows the configuration of a lateral-shearing interferometer based upon the Michelson interferometer. This configuration is the most similar to the one used in an autocorrelator of a classic type (Figure 4). In this case, however, the mirrors in the two arms of the interferometer are replaced by pairs of mirrors that are mutually perpendicular ($M_A$, $M_B$) and ($M_C$, $M_D$).

Operation of the lateral-shearing interferometer is described in what follows. The incoming beam F is reflected by an input bending mirror designated by $M_E$ and split by a beam splitter BS into two beams FA and FB. The beam FA impinges, in conditions of symmetry, upon the pair of mirrors $M_A$, $M_B$ and is then reflected back in the direction of the beam splitter BS. The beam FB is reflected by the mirrors $M_C$, $M_D$. The pair of mirrors $M_C$, $M_D$ is not perfectly symmetrical with respect to the direction of the beam FB, but rather translated by an amount $\underline{d}$ perpendicular to the direction of the beam FB. For this reason, since the beam FB does not impinge upon the mirrors in a symmetrical way with respect to the bisectrix of the angle formed by the reflecting surfaces, it is reflected in the direction of the beam splitter BS parallel to itself, but translated by the distance 2d. The two beams FA, FB, recombined by the beam splitter BS, are reflected in the direction of an output bending mirror $M_F$ and are by this reflected at a distance 2d apart from one another corresponding to twice the distance. The oscillation of the beam F, and hence the variation in the angle of incidence on the input bending mirror $M_E$, entails an optical-path difference OPD between the two outgoing beams FA and FB and hence a time delay $\Delta t$ between them, as occurs for all lateral-shearing interferometers and as expressed by the equations VI and VII.

It should be pointed out that the bending mirrors $M_E$ and $M_F$ have the purpose of maintaining the outgoing beams parallel to the incoming one, thus creating a configuration suitable for being inserted within the microscope, between the scanning head and the objective, as shown schematically in Figure 5.

The above configuration belongs to the class of interferometers referred to as "amplitude division" interferometers, on account of the fact that the two beams FA, FB are obtained by means of a partially reflecting surface (the beam splitter BS), which directs part of the amplitude of the incident beam F (the reflected one) into one arm of the interferometer and part (the transmitted one) into the other arm.

This characteristic means that the outgoing beams FA, FB maintain the same cross section as that of the incoming one, as may be noted from the schematic representation appearing in the bottom part of Figure 8. Furthermore, the two outgoing beams FA, FB are to a large extent superimposed. As a consequence of this, once they have been focused by the objective O of the microscope (Figure 5), they will arrive on the nonlinear device ND from the same mean direction. The autocorrelator which derives therefrom is hence of the collinear or interferometric type.

The alignment and positioning of the various components of said interferometer is somewhat critical, and this is the disadvantage of this type of configuration.

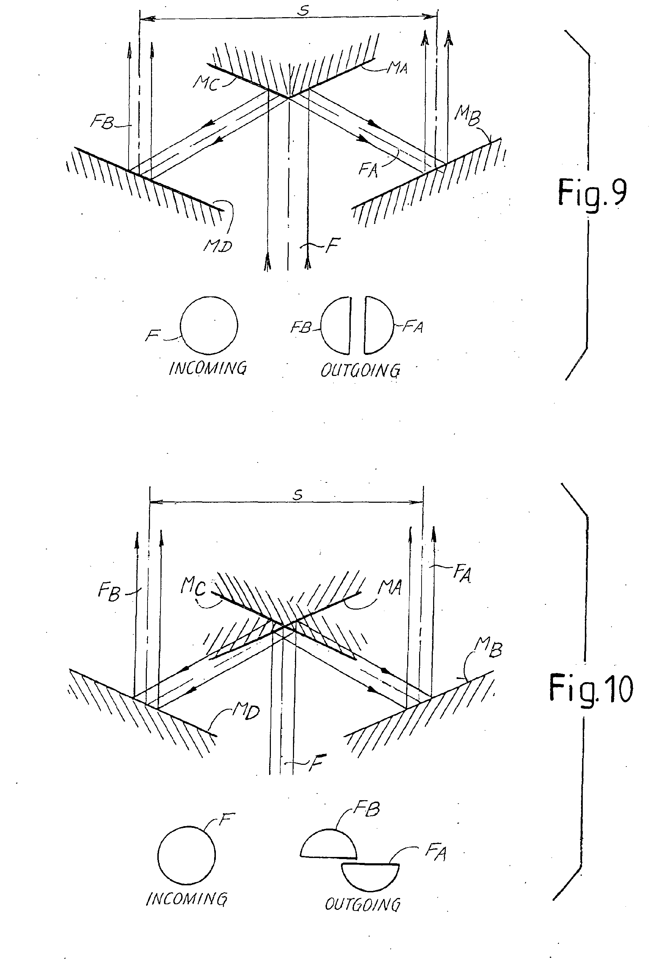

Figure 9 shows a configuration of the lateral-shearing parallel-mirror interferometer. This comprises two pairs of mirrors set parallel to one another ($M_A$, $M_B$) and ($M_C$, $M_D$). Unlike the previous configuration, this is an interferometer of the wavefront-division type. The right-hand half of the incident beam F is, in fact, translated laterally towards the right by the pair of mirrors ($M_A$, $M_B$) and forms the outgoing beam FA, whilst the left-hand part undergoes the same treatment in the opposite direction by means of the mirrors ($M_A$, $M_B$) and forms the outgoing beam FB. The bottom part of the figure shows the cross sections of the incoming and outgoing beams.

If the angle between the normals to the mirrors $M_A$ and $M_C$ is $2\alpha$, the value of the shear s is thus:

$$s = 4d \sin \alpha \qquad (VIII)$$

where d is the distance between the parallel mirrors of each pair.

The wavefront-division configuration means that the outgoing beams are completely separated and consequently are focused by the objective on the nonlinear device ND at a certain angle. The autocorrelator is hence of the non-collinear type.

The two parallel pairs of mirrors can be positioned alongside one another, as represented in Figure 9, or else, above one another, as represented schematically in Figure 10.

This interferometric configuration with parallel pairs of mirrors is akin to a device usually employed in commercially available autocorrelators, which is inserted as delay line in one of the two arms of the Michelson interferometer. In this case, the mirrors are arranged at the two ends of a shaft, which, rotating at a constant angular frequency, introduces a variable time delay.

Also this type of interferometer suffers from problems of alignment of the mirrors, which must remain parallel.

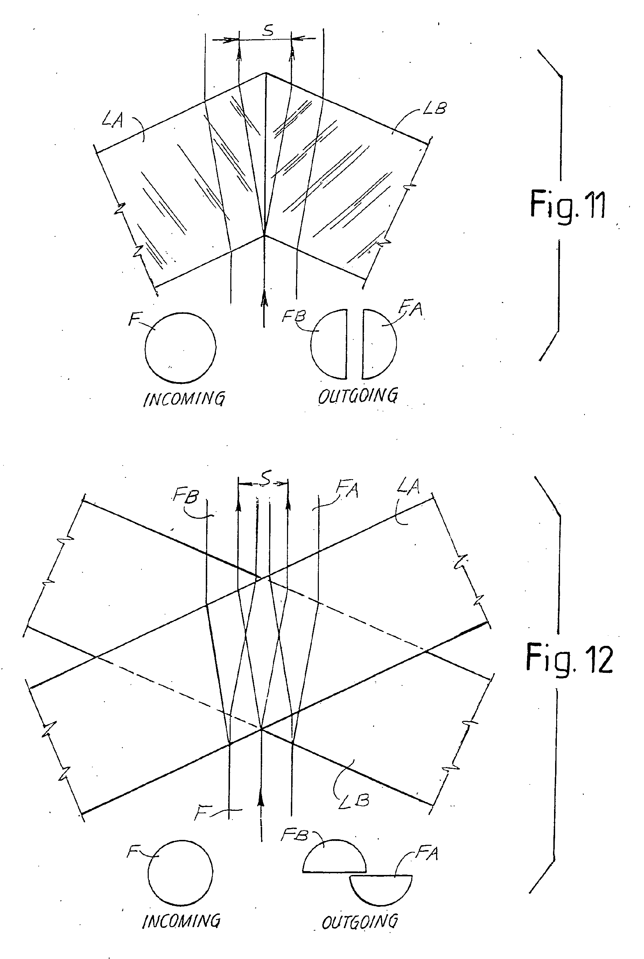

A similar configuration, but one which does not suffer from the aforesaid problem is illustrated in Figure 11. The interferometer represented schematically therein is a parallel-plate interferometer. Here the two pairs of parallel mirrors of the previous example are replaced by two plates of glass $L_A$, $L_B$ with plane and parallel faces. The displacement of the beam takes place, in this case, by refraction instead of by reflection.

Assuming once again that the angle between the normals to the plates is $2\alpha$, the value of the side shear s is given by the following equation:

$$s = 2d \sin \alpha(1\text{-}\cos\alpha/\sqrt{n^2\text{-}\sin \alpha^2}) \qquad \text{(IX)}$$

where d is the thickness of the plates and n the index of refraction.

In a way similar to the case previously described, the two plates can be set alongside one another, as represented in Figure 11, or else on top of one another, as represented schematically in Figure 12.

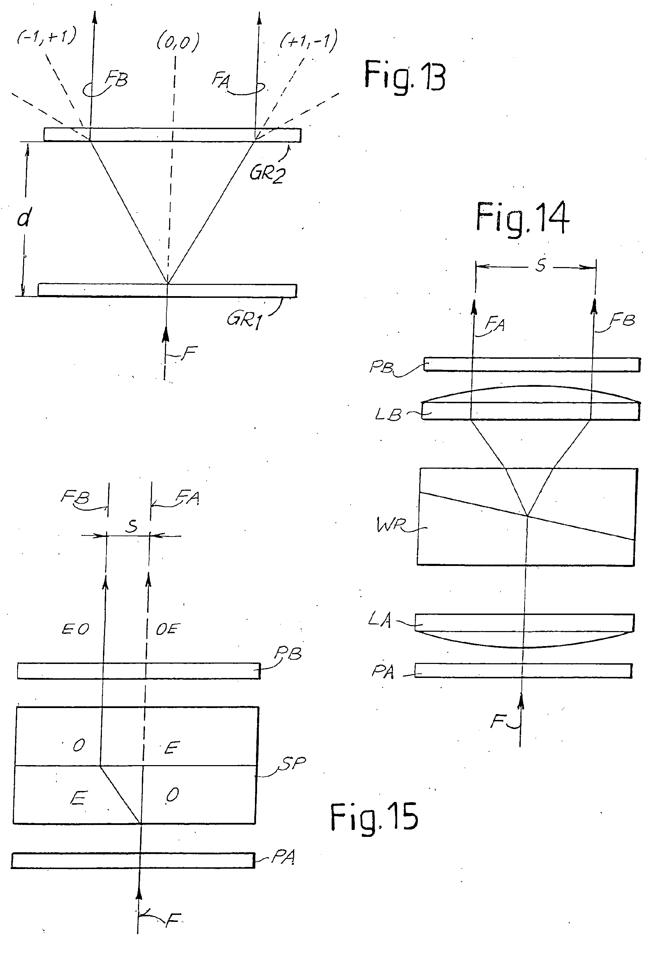

Figure 13 shows the diagram of a lateral-shearing interferometer of the double-grating type. Two gratings GR1 and GR2, with equal spatial frequency, are set, parallel to one another, at a distance d apart and with the lines in the same direction.

A light beam F incident on the first grating GR1 is diffracted in the three orders -1, 0, +1.

The orders higher than the first must be of a negligible intensity, or else their angle of diffraction must be large enough as not to enter the inlet pupil of the objective.

Each of the three orders -1, 0, +1 is then diffracted by the second grating GR2 in as many orders. If only the outgoing beams that propagate in the same direction as the incoming one are considered, since only they will be focused by the objective O on the nonlinear device ND, said beams number three, and are namely:

    1. the one that has been diffracted by GR1 in the order -1 and by GR2 in the order +1, which is designated by (-1, +1) and by FB in Figure 13;
    2. the one that has been diffracted by GR1 in the order +1 and by GR2 in the order -1, which is designated by (+1, -1) and by FA in Figure 13; and
    3. the one that has not been diffracted either by GR1 or by GR2, which is designated by (0, 0).

This is hence a three-beam interferometer, and not a two-beam one as required. However, the beams (-1, +1) and (+1, -1) traverse identical paths, which are different from that of the beam (0, 0). As the distance d between the gratings increases, this difference in paths increases.

Differences in paths mean differences in time of travel and hence, for a value of the distance d which is quite large, the light pulses that follow the paths (-1, +1) and (+1, -1) are no longer superimposed temporally on the one which follows the path (0, 0). In this condition, the presence of the beam (0, 0) contributes to the two-photon excitation of the nonlinear device ND in a way altogether independent of the other two beams, and the intensity of fluorescence due thereto is constant, and its contribution can be eliminated in the final data-processing stage.

An alternative system for getting rid of the beam (0, 0) is to use a phase grating with a profile of the line appropriately calculated for eliminating the order zero at the wavelength being used.

It is hence possible to limit our attention to considering only the beams (-1, +1) and (+1, -1). The interferometer can thus be considered as a two-beam one, as is required.

This configuration has the advantage of being very stable because it belongs to the class of interferometers referred to as common-path interferometers. The beams FA, FB, in fact, do not traverse spatially separated paths as occurs in the configuration described previously. Any effect of disturbance is undergone to the same extent by both of the beams and hence said effect is compensated.

In addition to this, the two-grating interferometer is compact and far from costly.

Figures 14 and 15 show two lateral-shearing birefrangent-plate interferometers. These interferometers form part of the family of polarization interferometric configurations. In these interferometers a birefrangent element is used as beam splitter. Of the two configurations described hereinafter one (Figure 14) uses a Wollaston prism, which generates an angular shearing of the incoming beam, and the other (Figure 15) uses a Savart plate or Savart polariscope, which produces at output a linear shearing of the beams.

Figure 14 shows the device. This comprises an input polarizer PA and an output polarizer PB and two lenses LA, LB. Set between the lenses LA, LB is a Wollaston plate WP. Within the latter, the beam F is split into two angularly shifted beams FA, FB, which are then brought back parallel to one another and set at a distance s from the lens LB.

A polarization configuration much simpler than that of the Wollaston interferometer is shown in Figure 15. In this configuration, the displacement caused by a Savart plate SP set between two polarizers PA and PB is a linear displacement instead of an angular displacement. The Savart plate is made up, in actual fact, of two identical birefrangent plates cut at 45° with respect to the optical axis and set crosswise with respect to one another.

The shear s produced is

$$s = \sqrt{2}d\,\frac{n_e^2 - n_o^2}{n_e^2 + n_o^2} \qquad (X)$$

where 2d is the thickness of the plate, $n_e$ is the extraordinary refractive index, and $n_o$ is the ordinary one.

In Figure 15, E designates the extraordinary beam, and O the ordinary one. At output, the ray EO has undergone an extraordinary refraction in the first plate and then an ordinary refraction. For the other ray OE the exact opposite occurs. It is to be noted that the ray OE lies on a plane parallel to that of the figure and its projection is shown dashed. The beams EO and OE are in any case parallel and constitute the beams FA and FB coming out of the interferometer.

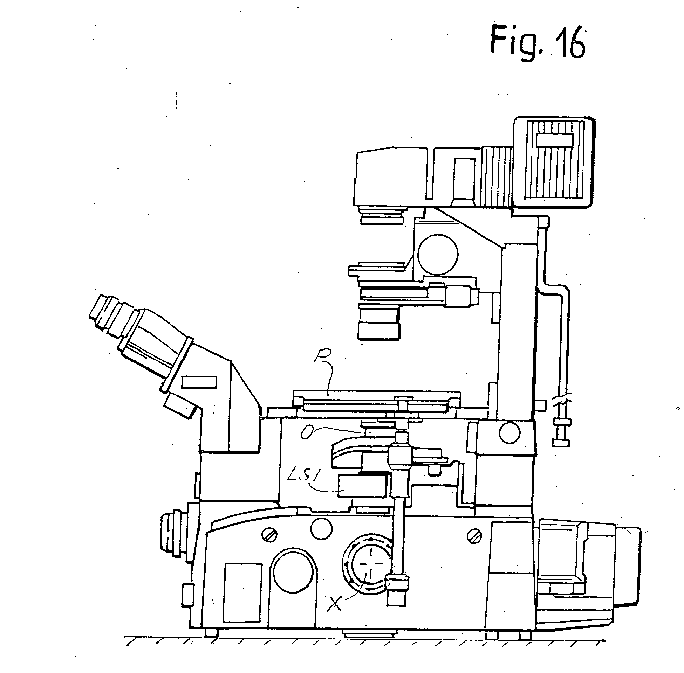

Figure 16 shows a simplified side view of an optical microscope, in which the same reference numbers as the ones used in Figures 1, 2 and 5 designate the main assemblies and components. The reference LSI designates an accessory inserted in the optical path of the microscope, in the same position in which other accessories, such as filters or the like, are inserted, said accessory comprising a lateral-shearing interferometer. The scanning head CSH is not shown in Figure 16. Its optical input to the microscope is designated by X.

It is to be understood that the drawing shows merely possible embodiments of the invention, which may undergo variations in shapes and arrangements of parts, without thereby departing from the scope of the underlying idea.

**Claims**

1. A confocal laser-scanning microscope, in particular a multiphoton microscope, comprising in combination:

   - a pulsed laser source;
   - a scanning head for scanning the laser beam generated by said source;
   - an optical path for said laser beam extending between said scanning head and a support for a specimen to be examined;
   - a focusing optics along said optical path; and
   - a photo-detector for detecting the radiation emitted by the specimen set on said support and impinged upon by the radiation of the laser source,

   **characterized in that** it comprises a lateral-shearing interferometer, which can be inserted along said optical path.

2. The microscope according to Claim 1, **characterized in that** said interferometer forms, with said focusing optics and said photo-detector, an autocorrelator for temporal characterization of the pulse of said laser source.

3. The microscope according to Claim 2, **characterized in that** the nonlinear device of said autocorrelator is constituted by a specimen set on said support.

4. The microscope according to Claim 1 or 2 or 3, **characterized in that** said interferometer is an interferometer for white light.

5. The microscope according to one or more of the preceding claims, **characterized in that** said interferometer is an interferometer for collimated light and is inserted in an area of the path in which the beam coming from the laser source is collimated.

6. The microscope according to one or more of the preceding claims, **characterized in that** said interferometer is of the type with outgoing beams that are mutually parallel and parallel with the incoming beam.

7. The microscope according to one or more of the preceding claims, **characterized in that** said interferometer is selected from the group including: parallel-plate interferometers; parallel-mirror interferometers; double-grating interferometers; birefrangent-plate interferometers; Wollaston-prism interferometers; Savart-prism interferometers.

8. The microscope according to one or more of the preceding claims, **characterized in that** said interferometer is set on a filter support, for being inserted in the optical path.

9. A method for temporal characterization of a pulsed laser beam in a confocal laser-scanning microscope, in particular a multiphoton microscope, **characterized in that** it generates a function of interferometric autocorrelation by setting a lateral-shearing interferometer downstream of the scanning head of said microscope and performing with said microscope a scan of a nonlinear device.

10. The method according to Claim 149 **characterized in that** said interferometer is set between the scanning head and the objective of the microscope.

11. The method according to Claim 9 or Claim 10, **characterized in that** said nonlinear device is set on the object-holder support of the microscope.

12. The method according to one or more of Claims 9 to 11, **characterized in that** said nonlinear device is a specimen uniformly dyed with a fluorescent dye.

13. The method according to one or more of Claims 9 to 12, **characterized in that** said interferometer is an interferometer for white light.

14. The method according to one or more of Claims 9 to 13, **characterized in that** said interferometer is an interferometer for collimated light and is inserted in an area of the path, in which the beam coming from the laser source is collimated.

15. The method according to one or more of the preceding claims, **characterized in that** said interferometer is of the type with outgoing beams that are mutually parallel and parallel with the incoming beam.

16. The method according to one or more of Claims 9 to 15, **characterized in that** it uses a double-grating interferometer, or else a parallel-plate interferometer, or else a parallel-mirror interferometer, or else a double-grating interferometer, or else a birefrangent-plate interferometer, or else a Wollaston-prism interferometer, or else a Savart-prism interferometer.

17. An accessory for a confocal laser-scanning microscope, in particular a multiphoton confocal laser-scanning microscope, comprising a lateral-shearing interferometer.

18. The accessory according to Claim 17, comprising means for setting said accessory in the optical path of the laser beam of the microscope downstream of the scanning head of the microscope itself.

19. The accessory according to Claim 17 or Claim 18, in which said interferometer is of the type with outgoing beams that are mutually parallel and parallel with the incoming beam.

20. The accessory according to one or more of Claims 17 to 19, in which said interferometer is an interferometer for collimated light.

21. The accessory according to one or more of Claims 17 to 20, in which said interferometer is an interferometer for white light.

22. The accessory according to one or more of Claims 17 to 21, in which said interferometer is a double-grating interferometer, or else a parallel-plate interferometer, or else a parallel-mirror interferometer, or else a double-grating interferometer, or else a birefrangent-plate interferometer, or else a Wollaston-prism interferometer, or else a Savart-prism interferometer.

23. An autocorrelator which comprises an optical path for a beam of electromagnetic radiation, comprising in said path a lateral-shearing interferometer and an image detector, said autocorrelator being **characterized in that** it further comprises means for angular scanning of the beam entering the interferometer.

Fig.1

(state of the art)

Fig.2

(state of the art)

Fig.3

(state of the art)

Fig. 4

Fig. 5

Fig. 6A

Fig. 6B

Fig.7

Fig.8

INCOMING  OUTGOING

S

MC    MA

FB    MB

FA

MD    F

F    INCOMING    FB    FA    OUTGOING

Fig.9

S

FB    MC    MA    FA

MB

MD

F

F    INCOMING    FB    FA    OUTGOING

Fig.10

Fig. 11

Fig. 12

Fig.13

Fig.14

Fig.15

Fig. 16

**European Patent Office**

**EUROPEAN SEARCH REPORT**

Application Number

EP 04 42 5769

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 577 394 B1 (ZAVISLAN JAMES M) 10 June 2003 (2003-06-10) * abstract; figure 1 * ----- | 1 | G02B21/00 G01J9/02 G01J11/00 G04F13/02 |
| A | WO 97/11355 A (WEBB WATT W ; XU CHRIS (US); CORNELL RES FOUNDATION INC (US)) 27 March 1997 (1997-03-27) * the whole document * ----- | 1-23 | |
| A | WO 03/010487 A (UNIV ROCHESTER) 6 February 2003 (2003-02-06) * the whole document * ----- | 1-23 | |
| A | US 2003/025911 A1 (WALMSLEY IAN A ET AL) 6 February 2003 (2003-02-06) * the whole document * ----- | 1-23 | |
| A | US 6 195 167 B1 (SLEAT WILLIAM ERNEST DONALD ET AL) 27 February 2001 (2001-02-27) * abstract; figure 5 * ----- | 1-23 | |
| X | PATENT ABSTRACTS OF JAPAN vol. 0122, no. 66 (P-735), 26 July 1988 (1988-07-26) -& JP 63 050709 A (FUJI PHOTO OPTICAL CO LTD), 3 March 1988 (1988-03-03) * abstract * ----- | 23 | TECHNICAL FIELDS SEARCHED (Int.Cl.7) G02B G01J G04F |
| X | US 4 003 658 A (KELSALL DENNIS) 18 January 1977 (1977-01-18) * figure 1 * ----- | 23 | |
| X | US 5 270 792 A (SNYDER JAMES J) 14 December 1993 (1993-12-14) * abstract * ----- | 23 | |

The present search report has been drawn up for all claims

| Place of search | Date of completion of the search | Examiner |
|---|---|---|
| Munich | 26 January 2005 | Daffner, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 04 42 5769

This annex lists the patent family members relating to the patent documents cited in  the above-mentioned European search report.
The members are as contained in the European Patent Office EDP file on
The European Patent Office is in no way liable for these particulars which are merely  given for the purpose of information.

26-01-2005

| Patent document cited in search report | | Publication date | Patent family member(s) | | Publication date |
|---|---|---|---|---|---|
| US 6577394 | B1 | 10-06-2003 | US | 6134010 A | 17-10-2000 |
| | | | US | 6134009 A | 17-10-2000 |
| | | | US | 6710875 B1 | 23-03-2004 |
| | | | US | 2001053019 A1 | 20-12-2001 |
| WO 9711355 | A | 27-03-1997 | AU | 700560 B2 | 07-01-1999 |
| | | | AU | 6972496 A | 09-04-1997 |
| | | | CA | 2231222 A1 | 27-03-1997 |
| | | | DE | 852716 T1 | 19-07-2001 |
| | | | EP | 0852716 A1 | 15-07-1998 |
| | | | JP | 10512959 T | 08-12-1998 |
| | | | JP | 2002139436 A | 17-05-2002 |
| | | | NO | 981032 A | 04-05-1998 |
| | | | NZ | 318277 A | 25-02-1999 |
| | | | US | 6166385 A | 26-12-2000 |
| | | | WO | 9711355 A1 | 27-03-1997 |
| | | | US | 6344653 B1 | 05-02-2002 |
| WO 03010487 | A | 06-02-2003 | EP | 1417449 A1 | 12-05-2004 |
| | | | WO | 03010487 A1 | 06-02-2003 |
| | | | US | 2003025911 A1 | 06-02-2003 |
| US 2003025911 | A1 | 06-02-2003 | EP | 1417449 A1 | 12-05-2004 |
| | | | WO | 03010487 A1 | 06-02-2003 |
| US 6195167 | B1 | 27-02-2001 | NONE | | |
| JP 63050709 | A | 03-03-1988 | JP | 1998025 C | 08-12-1995 |
| | | | JP | 7026826 B | 29-03-1995 |
| US 4003658 | A | 18-01-1977 | US | B492093 I5 | 23-03-1976 |
| US 5270792 | A | 14-12-1993 | WO | 9114921 A1 | 03-10-1991 |

EPO FORM P0459

For more details about this annex : see Official Journal of the  European Patent Office, No. 12/82